# EUROPÄISCHE PATENTSCHRIFT

(11) **EP 1 479 543 B1**
(45) Veröffentlichungstag und Bekanntmachung des Hinweises auf die Patenterteilung: **01.03.2006**
(21) Anmeldenummer: 04008527.6
(22) Anmeldetag: 08.04.2004
(51) Int. Cl.: B60G 15/12, F16F 9/05, F16F 9/54

(54) **Luftfeder-Dämpfer-Einheit**
Air spring-damper unit
Unité à ressort pneumatique et amortisseur

(30) Priorität: 29.04.2003 DE 10319474
(43) Veröffentlichungstag der Anmeldung: 24.11.2004
(73) Patentinhaber: Carl Freudenberg KG, 69469 Weinheim (DE)
(72) Erfinder: Lühmann, Cord, Dipl.-Ing, 21614 Buxtehude (DE); Bünsch, Rainer, Dipl.-Ing., 22175 Hamburg (DE)
(74) Vertreter: Mattausch, Klaus

(56) Entgegenhaltungen:
- DE-A1- 10 001 018
- DE-A1- 10 050 028
- US-A- 4 493 481
- US-A1- 2002 109 276

## Beschreibung

Die Erfindung betrifft eine Luftfeder-Dämpfer-Einheit eines Fahrzeuges, insbesondere Straßenfahrzeuges, bestehend wenigstens aus:
- einem Luftfederbalg aus elastomerem Werkstoff, der insbesondere mit einem eingebetteten Festigkeitsträger versehen ist, wobei der Luftfederbalg unter Ausbildung einer Schlaufe eine volumenelastische Luftkammer umschließt und zudem eine rohrförmige Außenführung aufweist;
- einem Deckelgehäuse mit integriertem Dämpferlager sowie einem Anschlussbereich für das eine Balgende;
- einem Abrollkolben mit ebenfalls einem Anschlussbereich für das andere Balgende und ferner einer Abrollfläche für die Schlaufe; sowie
- einem Schwingungsdämpfer, umfassend ein Behälterrohr und eine Kolbenstange, die einerseits mit dem Dämpferlager verbunden ist und andererseits gleitend in das Behälterrohr eintaucht.

Eine Luftfeder-Dämpfer-Einheit mit den oben genannten Grundbauteilen wird auch als Luftfederbein bezeichnet. Sie findet im Fahrzeugbau mit Schwerpunkt PKW-Sektor eine breite Anwendung, wobei insbesondere auf folgende Druckschriften verwiesen wird: DE 195 08 980 C2, DE 197 53 637 A1, DE 198 26 480 A1, DE 100 41 927 A1, DE 100 50 028 A1 und WO 03/004902 A1.

Im Rahmen einer Weiterentwicklung besteht die Aufgabe der Erfindung darin, eine Luftfeder-Dämpfer-Einheit mit einem zusätzlichen Luftvolumen bereitzustellen, um die Federsteifigkeit zu verringern und/oder Bauteilveränderungen vornehmen zu können, und zwar unter dem Gesichtspunkt der Materialeinsparung oder Verringerung der Bauteilabmessungen, insbesondere der Höhenverringerung.

Gelöst wird diese Aufgabe gemäß Kennzeichen des Patentanspruches 1 dadurch, dass die Außenführung des Luftfederbalges folgende drei Bereiche umfasst:
- einen deckelgehäuseseitigen Befestigungsbereich mit einem ersten Durchmesser;
- einen sich an den Befestigungsbereich anschließenden umlaufenden Aufweitungsbereich mit einem zweiten Durchmesser; sowie
- einen vom Aufweitungsbereich übergehenden abrollkolbenseitigen Auslaufbereich mit einem dritten Durchmesser; wobei
- der erste und dritte Durchmesser kleiner sind als der zweite Durchmesser, so dass der Aufweitungsbereich eine Basisfläche und zwei Seitenflanken umfasst, wobei der Luftfederbalg den Aufweitungsbereich unter Druck ausfüllt.

Mit diesem neuen konstruktiven Konzept der Außenführung ist nun insbesondere folgendes zu realisieren:
- Bei der Luftfeder-Dämpfer-Einheit wird lediglich die Außenführung im obigen Sinne geändert. Alle anderen Bauteile werden unverändert eingesetzt. Dies hat ein größeres Volumen der vom Luftfederbalg eingeschlossenen Luftkammer zur Folge. Hiermit wiederum wird die Federsteifigkeit der Luftfeder verringert.
- Das Deckelgehäuse ist zumeist topfförmig gestaltet, und zwar derart, dass eine zusätzliche Luftkammer (Druckbehälter) entsteht, die mit der volumenelastischen Luftkammer kommuniziert. Das Deckelgelläuse trägt also zu einem zusätzlichen Luftvolumen bei. Nachteilig ist jedoch, dass derartige Gehäuse zu einer unvorteilhaften Bauteilhöhe führen sowie auch einen größeren Kostenanteil einnehmen.

Durch die Bildung des Zusatzvolumens im Rahmen der konstruktiven Änderung der Außenführung unter Bildung des Aufweitungsbereiches lässt sich durch ein verkleinertes Deckelgehäuse unter Materialersparnis eine Höhenverringerung der Luftfeder-Dämpfer-Einheit realisieren. Es findet also in diesem Falle eine partielle oder vollständige Luftkammerverlagerung vom Deckelgehäuse in die aufgeweitete Außenführung statt. Da das Deckelgehäuse mit dem Federdom in Verbindung steht, kann beispielsweise auf diese Weise der Abstand des Federdoms zur Motorhaube vergrößert werden. Dies wiederum bietet Vorteile für die neuen Anforderungen an die Automobilindustrie im Bereich "Aufprallschutz".

Zweckmäßige Ausgestaltungen der Erfindung sind in den Patentansprüchen 2 bis 11 genannt.

Die Erfindung wird nun anhand von Ausführungsbeispielen unter Bezugnahme auf Zeichnungen erläutert. Es zeigen:
- Fig. 1: eine komplette Luftfeder-Dämpfer-Einheit mit dem neuen Konstruktionskonzept der Außenführung;
- Fig. 2: eine vergrößerte Darstellung der Außenführung nach Fig. 1 mit den drei Durchmesserbereichen;
- Fig. 3: eine Variante, bei der die Schlaufe des Luftfederbalges bei maximaler Einfederung nicht bis in den Aufweitungsbereich der Außenführung ausrollt;
- Fig. 4: eine Variante, bei der die Schlaufe des Luftfederbalges bei maximaler Einfederung bis in den Aufweitungsbereich der Außenführung ausrollt.

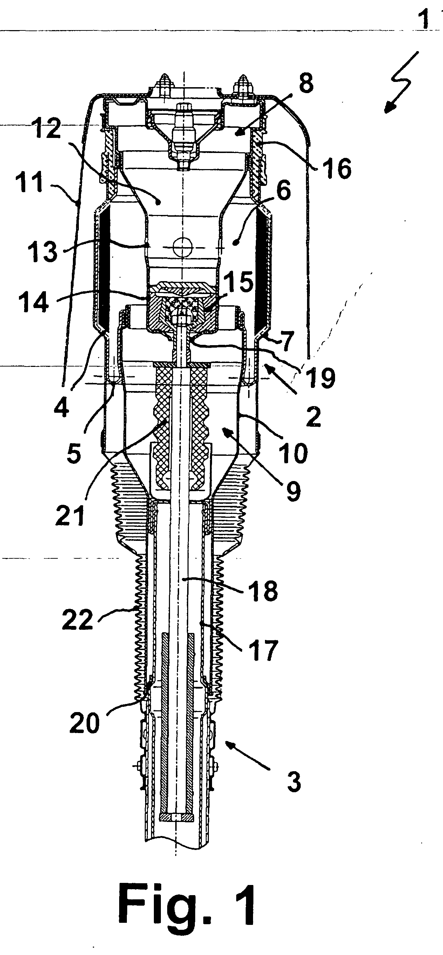

Nach Fig. 1 besteht die Luftfeder-Dämpfer-Einheit 1 aus zwei Bauteilgruppen, nämlich der Luftfeder **2** und dem Schwingungsdämpfer **3.** Diese beiden Bauteilgruppen werden nun näher vorgestellt.

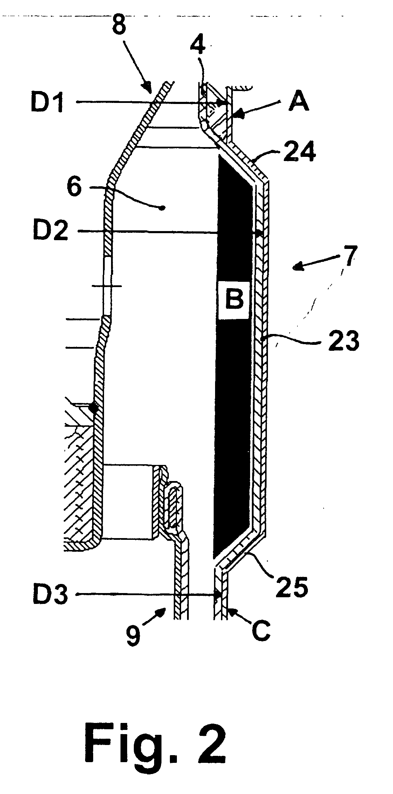

Die Luftfeder **2** umfasst einen Luftfederbalg **4** aus elastomerem Werkstoff, der insbesondere mit einem eingebetteten Festigkeitsträger in Form eines Axialbalges (DE 36 43 073 A1) oder Kreuzlagenbalges (DE 29 04 522 A1) versehen ist. Der Luftfederbalg umschließt unter Ausbildung einer Schlaufe **5** eine volumenelastische Luftkammer **6** und weist zudem eine rohrförmige Außenführung **7** auf, deren Aufweitungsbereich (dunkle Flächenmarkierung) in Verbindung mit Fig. 2 näher erläutert wird.

Das Deckelgehäuse **8** und der Abrollkolben **9** der Luftfeder **2** besitzen jeweils einen Anschlussbereich für das jeweilige Balgende, wobei die Befestigung beispielsweise mittels Klemmringen erfolgt. Der Abrollkolben weist ferner eine Abrollfläche **10** für die Schlaufe **5** auf.

Der Kopfbereich des topfförmigen Deckelgehäuses **8** wiederum steht mit dem Federdom **11** bzw. mit der Karosserie in Verbindung. Ferner umfasst das Deckelgehäuse eine Luftkammer **12,** die über wenigstens einen Überströmkanal **13** mit der volumenelastischen Luftkammer **6** kommuniziert, sowie eine Aufnahmekammer **14** für das Dämpferlager **15.** Das Dämpferlager selbst besteht aus einem Elastomerkörper und einem Tragstück. An das Deckelgehäuse ist ferner die Außenführung **7** angebunden, beispielsweise mittels einer elastischen Befestigungsmanschette **16.**

Der Schwingungsdämpfer **3** umfasst ein Behälterrohr **17,** das innerhalb des Abrollkolbens **9** angeordnet ist, und eine Kolbenstange **18,** die gleitend in das Behälterrohr eintaucht und zudem mit dem Dämpferlager **15** verbunden ist. Dabei ist zumeist das Tragstück des Dämpferlagers über eine Bodenöffnung **19** der Aufnahmekammer **14** fest mit der Kolbenstange verknüpft. Im Übergangsbereich von Behälterrohr und Abrollkolben ist ein Dichtmittel **20** vorhanden. Das Behälterrohr selbst steht mit einer Fahrwerksanbindung in Kontakt. Ein Anschlagpuffer **21** aus elastomerem Werkstoff kann das Dämpfersystem ergänzen. Hinsichtlich weiterer konstruktiver Details des Schwingungsdämpfers wird auf den eingangs zitierten Stand der Technik verwiesen.

Zumeist vervollständigt eine Schutzmanschette **22** die Luftfeder-Dämpfer-Einheit, die die Schlaufe **5** und die Abrollfläche **10** vor eindringendem Schmutz schützt.

Nach Fig. 2 umfasst die Außenführung **7** des Luftfederbalges **4** folgende drei Bereiche:
- einen deckelgehäuseseitigen Befestigungsbereich A mit einem ersten Durchmesser D1;
- einen sich an den Befestigungsbereich anschließenden umlaufenden Aufweitungsbereich B mit einem zweiten Durchmesser D2; sowie
- einen vom Aufweitungsbereich übergehenden abrollkolbenseitigen Auslaufbereich C mit einem dritten Durchmesser D3; wobei
- der erste und dritte Durchmesser D1 bzw. D3 kleiner sind als der zweite Durchmesser D2, so dass der Aufweitungsbereich B eine Basisfläche **23** und zwei Seitenflanken **24** und **25** umfasst, wobei der Luftfederbalg **4** den Aufweitungsbereich unter Druck ausfüllt.

Hinsichtlich des Aufweitungsbereiches B der Außenführung 7 gelten vorzugsweise folgende konstruktiven Parameter:
- Der erste Durchmesser D1 und der dritte Durchmesser D3 sind im Wesentlichen gleich.
- Die Basisfläche **23** weist überall den gleichen zweiten Durchmesser D2 auf.
- Die beiden Seitenflanken **24** bzw. **25** verlaufen in einem schrägen Winkel unter Bildung von Konusflächen, wobei der Winkel jeweils im Wesentlichen gleich ist.
- Der Aufweitungsbereich B ist rotationssymmetrisch, wobei diese Konstellation hier auch für die gesamte Außenführung gilt.
- Der Aufweitungsbereich B ist so gestaltet, dass eine Volumenvergrößerung von mindestens 5 %, insbesondere mindestens 10 %, eintritt, und zwar in Bezug auf eine zylindrische Außenführung bei ansonsten keiner Bauteilveränderung.

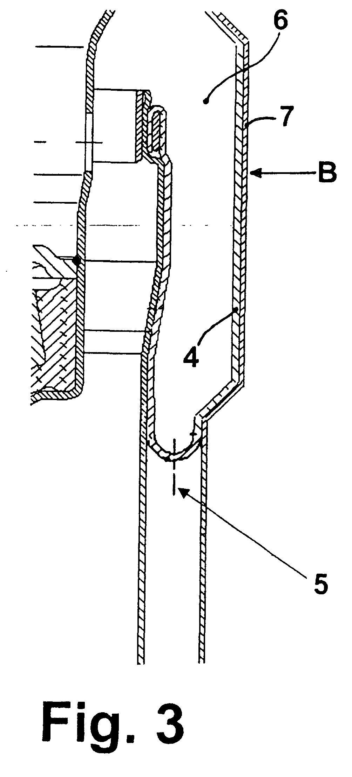

Fig. 3 zeigt eine Variante, bei der die Schlaufe **5** des Luftfederbalges **4** bei maximaler Einfederung nicht bis in den Aufweitungsbereich B der Außenführung **7** ausrollt. Durch diese Auslegung wird vermieden, dass der Berstdruck der Luftfeder bei maximaler Einfederung sinkt. Diese Konstellation findet insbesondere bei einem Axialbalg Anwendung.

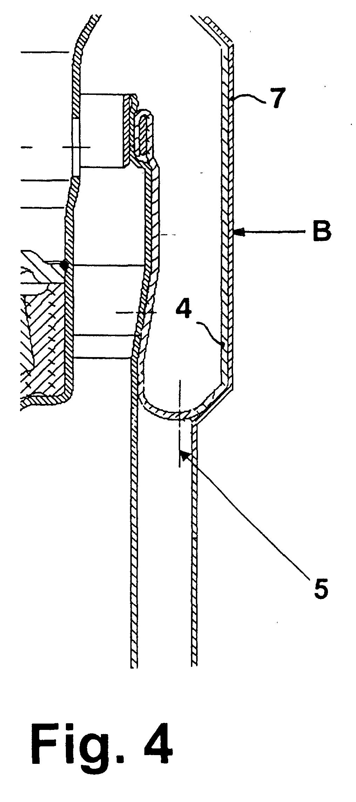

Fig. 4 zeigt eine Variante, bei der die Schlaufe **5** des Luftfederbalges **4** bei maximaler Einfederung bis in den Aufweitungsbereich B der Außenführung **7** ausrollt. Diese Art der Auslegung hat den Vorteil, dass die Kraft der Luftfeder aufgrund sprunghafter Wirkflächenvergrößerung (gestrichelte Linienführung im Vergleich der Fig. 3 und 4) progressiv ansteigt. Dieser Kraftanstieg kann zur Entlastung von Zusatzfedern oder Endanschlägen im Fahrwerk genutzt werden. Diese Konstellation findet insbesondere bei einem Kreuzlagenbalg Anwendung.

Die Durchmesser D1, D2 und D3 beziehen sich auf den Innendurchmesser der Außenführung in den jeweiligen Bereichen A, B und C.

### Bezugszeichenliste

- **1**: Luftfeder-Dämpfer-Einheit
- **2**: Luftfeder
- **3**: Schwingungsdämpfer
- **4**: Luftfederbalg
- **5**: Schlaufe (Rollfalte)
- **6**: volumenelastische Luftkammer
- **7**: Außenführung
- **8**: Deckelgehäuse
- **9**: Abrollkolben
- **10**: Abrollfläche
- **11**: Federdom
- **12**: Luftkammer (Druckbehälter)
- **13**: Überströmkanal
- **14**: Aufnahmekammer
- **15**: Dämpferlager
- **16**: Befestigungsmanschette
- **17**: Behälterrohr
- **18**: Kolbenstange
- **19**: Bodenöffnung der Aufnahmekammer
- **20**: Dichtmittel
- **21**: Anschlagpuffer
- **22**: Schutzmanschette
- **23**: Basisfläche
- **24**: Seitenflanke
- **25**: Seitenflanke
- A: Befestigungsbereich mit einem ersten Durchmesser D1
- B: Aufweitungsbereich mit einem zweiten Durchmesser D2
- C: Auslaufbereich mit einem dritten Durchmesser D3

## Patentansprüche

1. Luftfeder-Dämpfer-Einheit (1) eines Fahrzeuges, bestehend wenigstens aus:
- einem Luftfederbalg (4) aus elastomerem Werkstoff, der insbesondere mit einem eingebetteten Festigkeitsträger versehen ist, wobei der Luftfederbalg unter Ausbildung einer Schlaufe (5) eine volumenelastische Luftkammer (6) umschließt und zudem eine rohrförmige Außenführung (7) aufweist;
- einem Deckelgehäuse (8) mit integriertem Dämpferlager (15) sowie einem Anschlussbereich für das eine Balgende;
- einem Abrollkolben (9) mit ebenfalls einem Anschlussbereich für das andere Balgende und ferner einer Abrollfläche (10) für die Schlaufe (5); sowie
- einem Schwingungsdämpfer (3), umfassend ein Behälterrohr (17) und eine Kolbenstange (18), die einerseits mit dem Dämpferlager (15) verbunden ist und andererseits gleitend in das Behälterrohr eintaucht;
**dadurch gekennzeichnet, dass** die Außenführung (7) des Luftfederbalges (4) folgende drei Bereiche umfasst:
- einen deckelgehäuseseitigen Befestigungsbereich (A) mit einem ersten Durchmesser (D1);
- einen sich an den Befestigungsbereich anschließenden umlaufenden Aufweitungsbereich (B) mit einem zweiten Durchmesser (D2); sowie
- einen vom Aufweitungsbereich übergehenden abrollkolbenseitigen Auslaufbereich (C) mit einem dritten Durchmesser (D3); wobei
- der erste und dritte Durchmesser (D1, D3) kleiner sind als der zweite Durchmesser (D2) so dass der Ausweitungsbereich (B) eine Basisfläche (23) und zwei Seitenflanken (24, 25) umfasst, wobei der Luftfederbalg (4) den Aufweitungsbereich unter Druck ausfüllt.

2. Luftfeder-Dämpfer-Einheit nach Anspruch 1, **dadurch gekennzeichnet, dass** der erste Durchmesser (D1) und der dritte Durchmesser (D3) im Wesentlichen gleich sind.

3. Luftfeder-Dämpfer-Einheit nach Anspruch 1 oder 2, **dadurch gekennzeichnet**, die Basisfläche (23) des Aufweitungsbereiches (B) der Außenführung (7) überall den gleichen zweiten Durchmesser (D2) aufweist.

4. Luftfeder-Dämpfer-Einheit nach einem der Ansprüche 1 bis 3, **dadurch gekennzeichnet, dass** die beiden Seitenflanken (24, 25) des Aufweitungsbereiches (B) der Außenführung (7) in einem schrägen Winkel unter Bildung von Konusflächen verlaufen.

5. Luftfeder-Dämpfer-Einheit nach Anspruch 4, **dadurch gekennzeichnet, dass** die beiden Seitenflanken (24, 25) im Wesentlichen den gleichen Winkel haben.

6. Luftfeder-Dämpfer-Einheit nach einem der Ansprüche 1 bis 5, **dadurch gekennzeichnet, dass** wenigstens der Aufweitungsbereich (B) der Außenführung (7), vorzugsweise die gesamte Außenführung, rotationssymmetrisch ist.

7. Luftfeder-Dämpfer-Einheit nach einem der Ansprüche 1 bis 6, **dadurch gekennzeichnet, dass** der Aufweitungsbereich (B) der Außenführung (7) so gestaltet ist, dass eine Volumenvergrößerung von mindestens 5 %, insbesondere mindestens 10 %, eintritt, und zwar in Bezug auf eine zylindrische Außenführung bei ansonsten keiner Bauteilveränderung.

8. Luftfeder-Dämpfer-Einheit nach einem der Ansprüche 1 bis 7, **dadurch gekennzeichnet, dass** die Schlaufe (5) des Luftfederbalges (4) bei maximaler Einfederung nicht bis in den Aufweitungsbereich (B) der Außenführung (7) ausrollt.

9. Luftfeder-Dämpfer-Einheit nach Anspruch 8, **dadurch gekennzeichnet, dass** der Luftfederbalg (4) ein Axialbalg ist.

10. Luftfeder-Dämpfer-Einheit nach einem der Ansprüche 1 bis 7, **dadurch gekennzeichnet, dass** die Schlaufe (5) des Luftfederbalges (4) bei maximaler Einfederung bis in den Aufweitungsbereich (B) der Außenführung (7) ausrollt, und zwar unter Wirkflächenvergrößerung.

11. Luftfeder-Dämpfer-Einheit nach Anspruch 10, **dadurch gekennzeichnet, dass** der Luftfederbalg (4) ein Kreuzlagenbalg ist.

## Claims

1. Air spring-damper unit (1) of a vehicle, comprising at least:
- an air spring bellows (4) of elastomeric material which is provided in particular with an embedded strengthener, the air spring bellows enclosing an air chamber (6) which is elastic in volume, with a loop (5) being formed, and, in addition, having a tubular external guide (7);
- a cover housing (8) with an integrated damper bearing (15) and a connecting region for one end of the bellows;
- a rolling piston (9) likewise with a connecting region for the other end of the bellows and furthermore a rolling surface (10) for the loop (5) ; and
- a vibration damper (3), comprising a container tube (17) and a piston rod (18) which is connected at one end to the damper bearing (15) and at the other end enters the container tube in a sliding manner;
**characterized in that** the outer guide (7) of the air spring bellows (4) comprises the following three regions:
- a cover-housing-side fastening region (A) with a first diameter (D1);
- an encircling expansion region (B), which adjoins the fastening region, with a second diameter (D2); and
- a rolling-piston-side exit region (C), which merges from the expansion region, with a third diameter (D3);
- the first and third diameters (D1, D3) being smaller than the second diameter (D2), so that the expansion region (B) comprises a base surface (23) and two side flanks (24, 25), the air spring bellows (4) filling the expansion region under pressure.

2. Air spring-damper unit according to Claim 1, **characterized in that** the first diameter (D1) and the third diameter (D3) are essentially the same.

3. Air spring-damper unit according to Claim 1 or 2, **characterized in that** the base surface (23) of the expansion region (B) of the outer guide (7) has overall the same second diameter (D2).

4. Air spring-damper unit according to one of Claims 1 to 3, **characterized in that** the two side flanks (24, 25) of the expansion region (B) of the outer guide (7) run at an oblique angle with conical surfaces being formed.

5. Air spring-damper unit according to Claim 4, **characterized in that** the two side flanks (24, 25) have essentially the same angle.

6. Air spring-damper unit according to one of Claims 1 to 5, **characterized in that** at least the expansion region (B) of the outer guide (7), preferably the entire outer guide, is rotationally symmetrical.

7. Air spring-damper unit according to one of Claims 1 to 6, **characterized in that** the expansion region (B) of the outer guide (7) is designed in such a manner that an increase in volume of at least 5%, in particular at least 10%, occurs, to be precise with regard to a cylindrical outer guide with otherwise no changing of components.

8. Air spring-damper unit according to one of Claims 1 to 7, **characterized in that** the loop (5) of the air spring bellows (4) does not roll out into the expansion region (B) of the outer guide (7) under maximum spring deflection.

9. Air spring-damper unit according to Claim 8, **characterized in that** the air spring bellows (4) is an axial bellows.

10. Air spring-damper unit according to one of Claims 1 to 7, **characterized in that** the loop (5) of the air spring bellows (4) rolls out into the expansion region (B) of the outer guide (7) under maximum spring deflection, to be precise, with an enlargement of the active surfaces.

11. Air spring-damper unit according to Claim 10, **characterized in that** the air spring bellows (4) is a cross-position bellows.

## Revendications

1. Ensemble de ressort pneumatique et d'amortisseur
(1) d'un véhicule, constitué au moins de :
- un soufflet de suspension pneumatique (4) en matériau élastomère, qui est notamment pourvu d'un support de résistance incorporé, sachant que le soufflet de suspension pneumatique enferme une chambre d'air (6) de volume variable en formant une boucle (5) et présente en outre un guide extérieur tubulaire (7) ;
- un boîtier formant couvercle (8), avec un palier d'amortisseur intégré (15) ainsi qu'une région de raccordement pour une des extrémités du soufflet ;
- un piston de déroulement (9), avec également une région de raccordement pour l'autre extrémité du soufflet et en outre une surface de déroulement (10) pour la boucle (5) ; et
- un amortisseur de vibrations (3), comprenant un réceptacle tubulaire (17) et une tige de piston (18), qui d'un côté est reliée au palier d'amortisseur (15) et de l'autre côté s'enfonce à coulissement dans le réceptacle tubulaire ;
**caractérisé en ce que** le guide extérieur (7) du soufflet de suspension pneumatique (4) comprend les trois régions suivantes :
- une région de fixation (A) du côté du boîtier formant couvercle, ayant un premier diamètre (D1) ;
- une région élargie entourante (B) se raccordant à la région de fixation, ayant un deuxième diamètre (D2) ; et
- une région de sortie (C) faisant suite à la région élargie du côté du piston de déroulement, ayant un troisième diamètre (D3) ;
- sachant que le premier et le troisième diamètres (D1, D3) sont inférieurs au deuxième diamètre (D2), de sorte que la région élargie (B) comprend une surface de base (23) et deux flancs latéraux (24, 25), le soufflet de suspension pneumatique (4) remplissant sous pression la région élargie.

2. Ensemble de ressort pneumatique et d'amortisseur selon la revendication 1, **caractérisé en ce que** le premier diamètre (D1) et le troisième diamètre (D3) sont sensiblement identiques.

3. Ensemble de ressort pneumatique et d'amortisseur selon la revendication 1 ou 2, **caractérisé en ce que** la surface de base (23) de la région élargie (B) du guide extérieur (7) présente partout le même deuxième diamètre (D2).

4. Ensemble de ressort pneumatique et d'amortisseur selon l'une quelconque des revendications 1 à 3, **caractérisé en ce que** les deux flancs latéraux (24, 25) de la région élargie (B) du guide extérieur (7) s'étendent sous un angle oblique en formant des surfaces coniques.

5. Ensemble de ressort pneumatique et d'amortisseur selon la revendication 4, **caractérisé en ce que** les deux flancs latéraux (24, 25) possèdent sensiblement le même angle.

6. Ensemble de ressort pneumatique et d'amortisseur selon l'une quelconque des revendications 1 à 5, **caractérisé en ce qu'**au moins la région élargie (B) du guide extérieur (7), et de préférence la totalité du guide extérieur, est à symétrie de révolution.

7. Ensemble de ressort pneumatique et d'amortisseur selon l'une quelconque des revendications 1 à 6, **caractérisé en ce que** la région élargie (B) du guide extérieur (7) est conçue de telle sorte qu'on obtient une augmentation de volume d'au moins 5%, notamment d'au moins 10%, par rapport à un guide extérieur cylindrique, sans autre modification structurelle.

8. Ensemble de ressort pneumatique et d'amortisseur selon l'une quelconque des revendications 1 à 7, **caractérisé en ce que** la boucle (5) du soufflet de suspension pneumatique (4), au débattement maximal, ne se déroule pas jusque dans la région élargie (B) du guide extérieur (7).

9. Ensemble de ressort pneumatique et d'amortisseur selon la revendication 8, **caractérisé en ce que** le soufflet de suspension pneumatique (4) est un soufflet axial.

10. Ensemble de ressort pneumatique et d'amortisseur selon l'une quelconque des revendications 1 à 7, **caractérisé en ce que** la boucle (5) du soufflet de suspension pneumatique (4), au débattement maximal, se déroule jusque dans la région élargie (B) du guide extérieur (7), et ce avec augmentation de la surface active.

11. Ensemble de ressort pneumatique et d'amortisseur selon la revendication 10, **caractérisé en ce que** le soufflet de suspension pneumatique (4) est un soufflet à plis croisés.
